# EUROPÄISCHE PATENTSCHRIFT

(11) **EP 3 597 959 B1**
(45) Veröffentlichungstag und Bekanntmachung des Hinweises auf die Patenterteilung: **02.09.2026**
(21) Anmeldenummer: 18183879.8
(22) Anmeldetag: 17.07.2018
(51) Int. Cl.: F16F 13/30, F16F 15/02

(54) **SCHWINGUNGSISOLATIONSSYSTEM SOWIE DÄMPFER FÜR EIN SCHWINGUNGSISOLATIONSSYSTEM**
VIBRATION ISOLATION SYSTEM AND DAMPER FOR A VIBRATION ISOLATION SYSTEM
SYSTÈME D'ISOLATION CONTRE LES VIBRATIONS AINSI QU'AMORTISSEUR POUR SYSTÈME D'ISOLATION CONTRE LES VIBRATIONS

(43) Veröffentlichungstag der Anmeldung: 22.01.2020
(73) Patentinhaber: Integrated Dynamics Engineering GmbH, 65479 Raunheim (DE)
(72) Erfinder: van Loon, Guido, 65479 Raunheim (DE)
(74) Vertreter: Blumbach · Zinngrebe Patentanwälte PartG mbB

(56) Entgegenhaltungen:
- CN-A- 104 534 011
- CN-U- 204 512 335
- DE-A1- 102004 052 573
- JP-A- 2017 172 772

## Beschreibung

### Gebiet der Erfindung

Die Erfindung betrifft ein stationäres Schwingungsisolationssystem, welches insbesondere zur Aufnahme von Lithografiegeräten in der Halbleiterindustrie verwendet wird sowie einen Dämpfer für ein derartiges Schwingungsisolationssystem.

### Hintergrund der Erfindung

Stationäre Schwingungsisolationssysteme, wie sie insbesondere zur Lagerung von Lithografiegeräten verwendet werden, sind aus der Praxis bekannt.

Die deutsche Patentanmeldung DE 10 2004 052573 A1 betrifft eine Einrichtung zur Dämpfung von Schwingungen und/oder Stößen mit einer magnetorheologischen Flüssigkeit und mit zumindest einem in Bezug zu einem Strömungsquerschnitt der magnetorheologischen Flüssigkeit in seiner Lage einstellbaren Permanentmagnet zur Erzeugung eines steuerbaren, die magnetorheologischen Flüssigkeit durchsetzenden Magnetfeldes.

Ein derartiges Schwingungsisolationssystem umfasst typischerweise mechanische oder pneumatische Federn auf denen ein Tisch oder Rahmen schwingungsisoliert gelagert ist, welcher der Aufnahme eines zu isolierenden Lithografiegerätes dient.

Derartige Schwingungsisolationssysteme können als sogenannte aktive Schwingungsisolationssysteme ausgebildet, bei denen Sensoren an der schwingungsisoliert gelagerten Last und/oder am Boden, welche als Positionsgeschwindigkeits- oder Beschleunigungssensoren ausgebildet sind, Schwingungen messen und mittels Aktoren den Schwingungen aktiv entgegengewirkt wird.

Die Isolatoren, auf denen die schwingungsisolierte Last gelagert wird, können neben einer Feder einen Dämpfer umfassen.

Es ist möglich, die Schwingungsisolatoren, insbesondere, wenn diese als pneumatische Federn ausgebildet sind, in die aktive Regelung des Schwingungsisolationssystems einzubinden.

Weiter ist es aber für viele Anwendungsfälle auch wichtig, die Dämpfung und/oder die Federkonstante des Isolators in Abhängigkeit des Gewichtes der schwingungsisoliert gelagerten Last einzustellen. So kann insbesondere die Eigenfrequenz des Systems angepasst werden.

So zeigt beispielsweise die Offenlegungsschrift EP 2 998 611 A1 (Integrated Dynamics Engineering GmbH) einen pneumatischen Schwingungsisolator mit einem austauschbaren Blattfederpaket, über das die Charakteristik des Isolators einstellbar ist.

Um die Dämpfung des Isolators einzustellen, ist es aus der Patentschrift EP 2 759 735 B1 (Integrated Dynamics Engineering GmbH) bekannt, ein elektro- oder magneto-rheologisches Fluid zu verwenden, in welches ein Dämpfkörper eintaucht. Die Dämpfung kann so beispielsweise über eine Regelschleife des aktiven Schwingungsisolationssystems fortlaufend geändert werden.

Dies ist aufwendig und zieht insbesondere dann, wenn die Dämpfung des Isolators nicht fortlaufend geändert werden soll, sondern nur der Anpassung des Schwingungsisolationssystems an die Masse der isolierten Last dient, unnötigen Aufwand nach sich. Insbesondere ist so ein Stromanschluss des Isolators, bei Verwendung von elektro-rheologischen Fluiden sogar ein Hochspannungsanschluss erforderlich.

### Aufgabe der Erfindung

Der Erfindung liegt demgegenüber die Aufgabe zugrunde, ein Schwingungsisolationssystem bzw. einen Dämpfer für ein Schwingungsisolationssystem bereitzustellen, bei welchem auf einfache Weise die Dämpfung verändert werden kann.

### Zusammenfassung der Erfindung

Die Aufgabe der Erfindung wird bereits durch inen Dämpfer für ein stationäres Schwingungsisolationssystem nach dem unabhängigen Anspruch gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft einen Dämpfer für ein stationäres Schwingungsisolationssystem.

Dieses ist insbesondere zur schwingungsisolierten Lagerung von Geräten zur Prozessierung von Halbleiterbauelementen, wie beispielsweise Lithografiegeräten, ausgebildet.

Das Schwingungsisolationssystem umfasst insbesondere eine auf zumindest drei Schwingungsisolatoren gelagerte Platte, auf welcher zumindest ein Gerät zur Prozessierung von Halbleiterbauelementen schwingungsisoliert gelagert ist.

Es handelt sich also um eine schwingungsisoliert gelagerte Last, welche auf Schwingungsisolatoren gelagert ist.

Das Schwingungsisolationssystem umfasst des Weiteren Dämpfer. Gemäß der Erfindung umfassen die Dämpfer ein magneto-rheologisches Fluid, über das ein Dämpfkörper, welcher mit der schwingungsisoliert gelagerten Last verbunden ist, gedämpft wird.

Gemäß der Erfindung ist die Viskosität des magneto-rheologischen Fluids über einen bewegbaren Permanentmagneten veränderbar.

Statt eines Systems, bei dem die Dämpfung während des Betriebs permanent über einen Controller verändert werden kann, sieht die Erfindung also vor, über einen bewegbaren Permanentmagneten, welcher nach dem Bewegen seine Position beibehält, die Dämpfung auf einfache Weise anzupassen.

Es versteht sich, dass im Sinne der Erfindung, wie es bei einem weiteren Ausführungsbeispiel vorgesehen ist, zusätzlich auch ein Elektromagnet vorhanden sein kann, über den die Dämpfungscharakteristik im Rahmen einer aktiven Regelung fortlaufend geändert werden kann.

Auch bei dieser Ausführungsform kann aber über den bewegbaren Magneten eine Grundeinstellung in Abhängigkeit von der Masse der schwingungsisoliert gelagerten Last vorgenommen werden.

Der Magnet ist vorzugsweise bewegbar, ohne mit einem Controller zusammenzuwirken.

Es ist insbesondere vorgesehen, dass der Permanentmagnet manuell bewegbar ist, insbesondere werkzeuglos.

Die Erfindung bezieht sich insbesondere auf einen Schwingungsisolator mit einem Dämpfer, welcher dazu ausgebildet ist, nicht mit einer elektrischen Regelung zusammenzuwirken. Die Dämpfung lässt sich also ohne ein Zusammenwirken mit externen Signalgebern einstellen.

Gemäß der Erfindung ist der Permanentmagnet angrenzend zu einer Kammer mit dem magneto-rheologischen Fluid drehbar angeordnet und insbesondere um eine Achse verdrehbar.

Über einen verdrehbaren Permanentmagnet kann auf sehr einfache Weise und sehr schnell die Dämpfungscharakteristik angepasst werden.

Es ist insbesondere vorgesehen, dass die Achse, um die der Permanentmagnet verdrehbar ist, im Wesentlichen senkrecht zu einer vertikalen Wirkachse des Dämpfers ausgebildet ist.

Die Dämpfer sind vorzugsweise sowohl in horizontaler als auch in vertikaler Richtung wirksam.

Gemäß einer Ausführungsform sind die Dämpfer in den Schwingungsisolatoren integriert. Insbesondere können die Schwingungsisolatoren ein Gehäuse umfassen, in welchem sowohl ein Dämpfer als auch eine Feder, insbesondere eine pneumatische Feder, sitzt.

Gemäß der Ausführungsform der Erfindung ist das Schwingungsisolationssystem als aktives Schwingungsisolationssystem ausgebildet. Dieses umfasst zumindest einen Sensor, welcher auf der schwingungsisoliert gelagerten Last und/oder auf dem Boden angeordnet ist und über den Schwingungen erfasst werden. Weiter umfasst das aktive Schwingungsisolationssystem einen Controller, welcher Aktoren ansteuert, die aktiv Schwingungen entgegenwirken.

Gemäß einer anderen Ausführungsform kann das Schwingungsisolationssystem aber auch als rein passives Schwingungsisolationssystem ausgebildet sein. Diesem kommt dann zugute, dass der Dämpfer keinerlei elektrische Regelungskomponenten umfassen muss.

Es versteht sich, dass sämtliche vorstehend, im Zusammenhang mit den Dämpfern beschriebenen Merkmale auch bei dem nachfolgend beschriebenen Dämpfer vorhanden sein können.

Der Dämpfer umfasst eine Kammer mit einem magneto-rheologischen Fluid, in welches ein Dämpfkörper eintaucht. Angrenzend zur Kammer ist ein drehbarer Permanentmagnet angeordnet, über dessen Drehung der magnetische Fluss in der Kammer und damit die Viskosität des magneto-rheologischen Fluids veränderbar ist.

Wie bereits vorstehend beschrieben, kann so auf sehr einfache Weise die Dämpfung an die Masse der schwingungsisoliert gelagerten Last angepasst werden.

Gemäß einer bevorzugten Ausführungsform der Erfindung ist die Kammer in einen ferromagnetischen Träger eingesetzt, welcher einen Polschuh bildet.

Der Permanentmagnet ist unter der Kammer mit dem magneto-rheologischen Fluid angeordnet, wobei sich seitlich angrenzend zum Permanentmagnet zwei ferromagnetische Hälften bis neben die Kammer mit dem magneto-rheologischen Fluid erstrecken.

Durch diese Hälften werden wiederum Polschuhe gebildet, über die in Abhängigkeit von der Stellung des Permanentmagneten ein minimaler und maximaler magnetischer Fluss in der Kammer erzeugt werden kann.

Der Permanentmagnet ist insbesondere in einem Spalt zwischen zwei ferromagnetischen Hälften angeordnet. Es versteht sich, dass der Spalt nicht leer sein muss, sondern auch mit einem nicht-ferromagnetischen Material befüllt sein kann.

Insbesondere können die ferromagnetischen Hälften mittels einem sich durch den Spalt erstreckenden Kunststoff miteinander verbunden sein.

Um ein möglichst starkes Magnetfeld innerhalb der Kammer erzeugen zu können, ist es gemäß einer Ausführungsform der Erfindung vorgesehen, dass sich der Permanentmagnet bis in jeweils eine Ausnehmung der ferromagnetischen Hälften erstreckt.

Die Kammer kann beispielsweise formschlüssig in den ferromagnetischen Träger eingesetzt sein.

Bei der Kammer kann es sich insbesondere um ein Gefäß aus Kunststoff handeln. Die Kammer kann oben, wo insbesondere der Dämpfkörper an die schwingungsisoliert gelagerte Last angebunden wird, offen sein. Gemäß einer anderen Ausführungsform ist die Kammer verschlossen, beispielsweise mit einer Membran aus elastischem Material.

Der Dämpfkörper kann ein Fortsatz zum Verbinden mit der zu isolierenden Masse umfassen. Dabei kann es sich insbesondere um einen Stift oder ein Gewindestab handeln.

Die Erfindung betrifft des Weiteren einen Schwingungsisolator, welcher eine Feder sowie den zuvor beschriebenen Dämpfer umfasst.

### Kurzbeschreibung der Zeichnungen

Der Gegenstand der Erfindung soll bezugnehmend auf ein schematisch dargestelltes Ausführungsbeispiel anhand der Zeichnungen Fig. 1 bis Fig. 4 näher erläutert werden.
Fig. 1 ist eine schematische Schnittansicht eines Ausführungsbeispiels eines erfindungsgemäßen Dämpfers.
Anhand der Seitenansichten des Dämpfers gemäß Fig. 2 und Fig. 3 soll erläutert werden, wie die Dämpfung über einen bewegbaren Permanentmagneten auf einfache Weise verändert werden kann.
Fig. 4 ist eine schematische Ansicht eines Schwingungsisolationssystems.

### Detaillierte Beschreibung der Zeichnungen

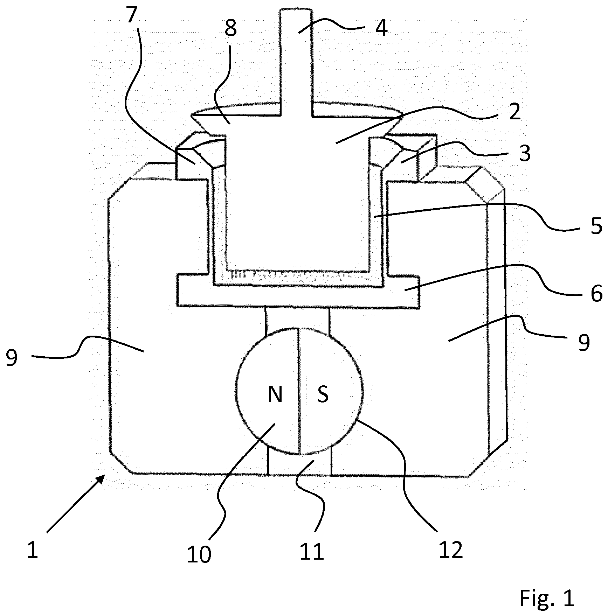

Fig. 1 zeigt in einer schematischen Schnittansicht ein Ausführungsbeispiel eines erfindungsgemäßen Dämpfers 1.

Der Dämpfer 1 umfasst einen Dämpfkörper 2, der in eine Kammer 3 eintaucht, welche mit einem magneto-rheologischen Fluid 5 befüllt ist.

Der Dämpfkörper 2 kann sich in diesem Ausführungsbeispiel sowohl in vertikaler als auch in horizontaler Richtung in der Kammer 3 bewegen. Es handelt sich also um einen Dämpfer 1, welcher sowohl horizontal als auch vertikal wirksam ist.

Der Dämpfkörper 2 ist in dieser schematischen Ansicht als einfacher Zylinder dargestellt. Es versteht sich, dass der Dämpfkörper 2 zur Erhöhung der Dämpfung beispielsweise auch aus mehreren horizontal und/oder vertikal voneinander beabstandeten Platten bestehen kann.

Der Dämpfkörper 2 umfasst einen Fortsatz 4, mit dem der Dämpfer 1 mit der schwingungsisoliert gelagerten Last verbunden wird.

Die Kammer 3, welche vorzugsweise aus Kunststoff besteht, umfasst in diesem Ausführungsbeispiel einen Sockel 6 sowie einen Kragen 7 und ist so formschlüssig in korrespondierenden Aussparungen zwischen zwei ferromagnetischen Hälften 9 gehalten. Die ferromagnetischen Hälften 9 wirken als Polschuhe und dienen in diesem Ausführungsbeispiel gleichzeitig als Träger der Kammer 3.

In diesem Ausführungsbeispiel umfasst auch der Dämpfkörper 2 einen Kragen 8. Dieser kann insbesondere das Eintauchen des Dämpfkörpers 2 in die Kammer 3 begrenzen.

Die Kammer 3 ist in diesem Ausführungsbeispiel oben offen dargestellt. Es versteht sich, dass aber die Kammer 3 beispielsweise auch mit einer Membran verschlossen sein kann, um das in der Kammer vorhandene Fluid 5 einzuschließen.

Unterhalb der Kammer 3 ist in einem sich vertikal erstreckenden Spalt 11 zwischen den ferromagnetischen Hälften 9 ein verdrehbarer Permanentmagnet 10 angeordnet.

Die Drehachse des Permanentmagneten 10 erstreckt sich senkrecht zur vertikalen Wirkachse entlang des Spalts 11. Der Spalt 11 kann zumindest teilweise mit einem nicht-ferromagnetischen Material befüllt sein. Insbesondere kann der Spalt 11 eine Vergussmasse aus Kunststoff umfassen, welche die ferromagnetischen Hälften 9 miteinander verbindet.

Der Permanentmagnet 10 ist vorzugsweise von außen zugänglich und per Hand verdrehbar.

So kann auf sehr einfache Weise die Dämpfung angepasst werden.

In diesem Ausführungsbeispiel erstreckt sich der Permanentmagnet 10 ferner bis in Ausnehmungen 12 der ferromagnetischen Hälften 9.

In dieser Darstellung hat der Permanentmagnet 10 die Form eines Kreiszylinders. Es ist aber ebenso möglich, einen rechteckigen geformten Permanentmagneten zu verwenden.

Der Permanentmagnet 10 ist in der Darstellung gemäß Fig. 1 so gedreht, dass sich die Pole horizontal gegenüberliegen und in Richtung der ferromagnetischen Hälften 9 zeigen.

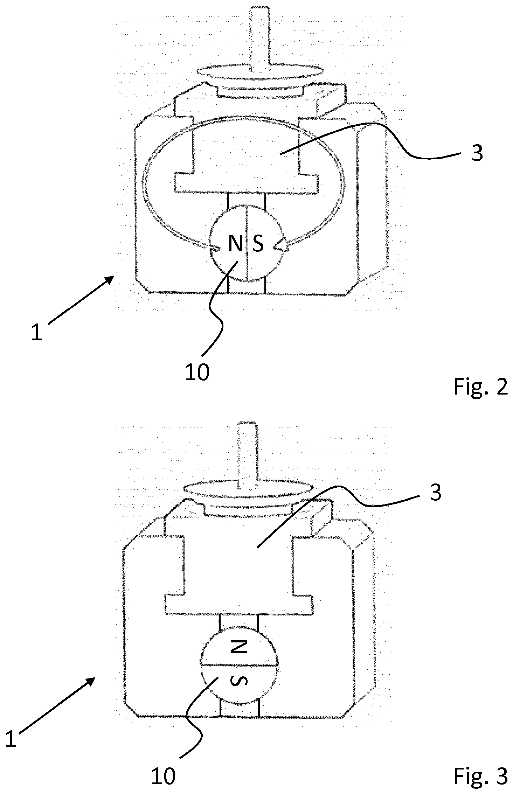

Wie in der Seitenansicht gemäß Fig. 2 illustriert ist, wird so über die als Polschuhe dienenden ferromagnetischen Hälften ein maximaler magnetischer Fluss innerhalb der Kammer 3 erreicht, so dass der Dämpfer 1 auf eine maximale Dämpfungswirkung eingestellt ist.

Wie in Fig. 3 illustriert ist, kann der Permanentmagnet derart verdreht werden, dass nunmehr die Pole vertikal gegenüberliegen. Hierdurch wird über die Polschuhe kein oder nur ein minimaler magnetischer Fluss innerhalb der Kammer 3 bewirkt und der Dämpfer 1 ist auf eine minimale Dämpfungswirkung eingestellt.

Es versteht sich, dass vorzugsweise der Magnet 10 stufenlos verdrehbar ist, so dass sich die Dämpfung dementsprechend stufenlos anpassen lässt.

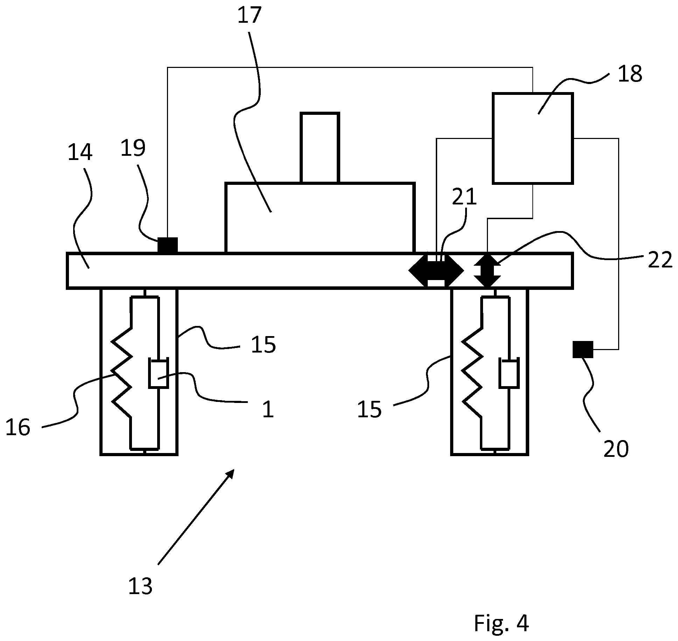

Fig. 4 ist eine schematische Ansicht eines Schwingungsisolationssystems 13, welches mehrere der zuvor beschriebenen Dämpfer 1 umfassen kann.

Das Schwingungsisolationssystem 13 umfasst vorzugsweise zumindest drei Schwingungsisolatoren 15, die eine schwingungsisoliert gelagerte Platte 14 abstützen.

Auf der Platte 14, welche eine beliebige Ausgestaltung haben kann, ist beispielsweise ein Lithografiegerät 17 angeordnet.

Die Schwingungsisolatoren 15 umfassen jeweils eine Feder 16 sowie einen Dämpfer 1.

Der Dämpfer 1 umfasst einen bewegbaren Permanentmagnet (in dieser Ansicht nicht dargestellt), über welchen die Dämpfung des jeweiligen Schwingungsisolators 15 auf einfache Weise eingestellt werden kann.

Insbesondere kann so die Dämpfung der Masse der schwingungsisoliert gelagerten Last angepasst werden. Die schwingungsisoliert gelagerte Last setzt sich im Wesentlichen aus der Masse der Platte 14 sowie des darauf gelagerten Lithografiegeräts 17 zusammen.

Vorzugsweise ist auch die Federkonstante der Feder 16 veränderbar.

Weiter kann der Schwingungsisolator 15 eine Höheneinstellung umfassen, ebenfalls um eine Einstellung des Schwingungsisolators an die Gewichtsverteilung der schwingungsisoliert gelagerten Last vorzunehmen.

In diesem Ausführungsbeispiel ist das Schwingungsisolationssystem 13 als aktives Schwingungsisolationssystem ausgebildet.

Dieses kann beispielsweise einen auf der schwingungsisoliert gelagerten Last angeordneten Sensor 19 und/oder einen am Boden angeordneten Sensor 20 umfassen.

Die Sensoren 19, 20 sind mit einem Controller 18 verbunden, welcher seinerseits an der schwingungsisoliert gelagerten Last angreifend Aktoren 21, 22 ansteuert, über die Schwingungen in diesem Ausführungsbeispiel sowohl in horizontaler als auch in vertikaler Richtung entgegengewirkt werden kann.

In dem hier dargestellten Ausführungsbeispiel sind die Schwingungsisolatoren 15 nicht in die aktive Regelung eingebunden.

Es versteht sich, dass, wie es gemäß eines anderen Ausführungsbeispiels vorgesehen ist, die Schwingungsisolatoren 15 auch in die aktive Regelung eingebunden sein können.

So kann beispielsweise eine pneumatische Feder über den Controller 18 angesteuert werden.

Weiter ist gemäß eines weiteren Ausführungsbeispiels denkbar, zusätzlich zum bewegbaren Permanentmagneten den Dämpfer 1 mit einem Elektromagneten zu versehen, über den fortlaufend während des Betriebs die Dämpfung angepasst werden kann.

Gemäß eines anderen Ausführungsbeispiels ist das Schwingungsisolationssystem 1 als rein passives Schwingungsisolationssystem ohne aktive Regelung ausgebildet. Dem erfindungsgemäßen Dämpfer 1 kommt dabei zugute, dass die Dämpfung verändert werden kann, ohne dass eine elektrische Ansteuerung erforderlich ist.

Durch die Erfindung ist es insbesondere möglich, auf sehr einfache Weise die Dämpfung der Schwingungsisolatoren 15 der Masse der zu isolierenden Last anzupassen.

### Bezugszeichenliste

- 1: Dämpfer
- 2: Dämpfkörper
- 3: Kammer
- 4: Fortsatz
- 5: magneto-rheologisches Fluid
- 6: Sockel
- 7: Kragen
- 8: Kragen
- 9: ferromagnetische Hälfte
- 10: Permanentmagnet
- 11: Spalt
- 12: Ausnehmung
- 13: Schwingungsisolationssystem
- 14: Platte
- 15: Schwingungsisolator
- 16: Feder
- 17: Lithografiegerät
- 18: Controller
- 19: Sensor
- 20: Sensor
- 21: Aktor
- 22: Aktor

## Patentansprüche

1. Dämpfer (1) für ein stationäres Schwingungsisolationssystem (13) umfassend eine Kammer (3) mit einem magneto-rheologischen Fluid (5), in welches ein Dämpfkörper (2) eintaucht, wobei angrenzend zur Kammer (3) ein drehbarer Permanentmagnet (10) angeordnet ist, über dessen Drehung der magnetische Fluss in der Kammer (3) und damit die Viskosität des magneto-rheologischen Fluids (5) veränderbar ist, **dadurch gekennzeichnet, dass** der Permanentmagnet (10) unter der Kammer (3) mit dem magneto-rheologischen Fluid (5) angeordnet ist, wobei sich seitlich angrenzend zum Permanentmagneten (10) zwei ferromagnetische Hälften (9) bis neben die Kammer (3) mit dem magneto-rheologischen Fluid erstrecken.

2. Dämpfer (1) nach dem vorstehenden Anspruch, **dadurch gekennzeichnet, dass** der Permanentmagnet (10) angrenzend zu einer Kammer (3) mit dem magnetorheologischen Fluid (5) angeordnet ist und um eine Achse verdrehbar ist.

3. Dämpfer (1) nach dem vorstehenden Anspruch, **dadurch gekennzeichnet, dass** die Achse, um die der Permanentmagnet (10) verdrehbar ist, im Wesentlichen senkrecht zu einer vertikalen Wirkachse des Dämpfers (1) ausgerichtet ist.

4. Dämpfer (1) nach einem der vorstehenden Ansprüche, **dadurch gekennzeichnet, dass** die Kammer (3) in einen ferromagnetischen Träger eingesetzt ist, welcher einen Polschuh (9) bildet.

5. Dämpfer (1) nach einem der vorstehenden Ansprüche, **dadurch gekennzeichnet, dass** der Permanentmagnet (10) in einem Spalt zwischen zwei ferromagnetischen Hälfen (9) angeordnet ist.

6. Dämpfer (1) nach dem vorstehenden Anspruch, **dadurch gekennzeichnet, dass** der Permanentmagnet (10) sich bis in jeweils eine Ausnehmung der ferromagnetischen Hälften (9) erstreckt.

7. Dämpfer (1) nach einem der vorstehenden Ansprüche, **dadurch gekennzeichnet, dass** die Kammer (3) formschlüssig in einen ferromagnetischen Träger eingesetzt ist.

8. Dämpfer (1) nach einem der vorstehenden Ansprüche, **dadurch gekennzeichnet, dass** der Dämpfkörper (2) einen Fortsatz (4) zum Verbinden mit der einer zu isolierenden Masse umfasst, und/oder dass die Kammer (3) als Kunststoffgefäß ausgebildet ist und/oder dass der Dämpfer (1) horizontal und vertikal wirksam ausgebildet ist.

9. Schwinungsisolator (15), umfassend eine Feder (16) sowie einen Dämpfer (1) nach einem der vorstehenden Ansprüche.

10. Stationäres Schwingungsisolationssystem (13), insbesondere zur schwingungsisolierten Lagerung von Geräten zur Prozessierung von Halbleiterbauelementen, umfassend eine schwingungsisoliert gelagerte Last, welche auf Schwingungsisolatoren (15) gelagert ist, und umfassend Dämpfer (1) gemäß einem der Ansprüche 1-8.

11. Stationäres Schwingungsisolationssystem (13) nach dem vorstehenden Anspruch, **dadurch gekennzeichnet, dass** die Dämpfer (1) in den Schwingungsisolatoren (15) integriert sind.

12. Stationäres Schwingungsisolationssystem (13) nach einem der Ansprüche 10 oder 11, **dadurch gekennzeichnet, dass** das Schwingungsisolationssystem (13) als aktives Schwingungsisolationssystem ausgebildet ist.

## Claims

1. A damper (1) for a stationary vibration isolation system (13), comprising a chamber (3) holding a magnetorheological fluid (5) into which a damping body (2) is immersed, wherein a rotatable permanent magnet (10) is arranged adjacent to the chamber (3), the rotation of which allows to change the magnetic flux inside the chamber (3) and hence the viscosity of the magnetorheological fluid (5);
**characterised in that** the permanent magnet (10) is arranged below the chamber (3) holding the magnetorheological fluid (5), wherein two ferromagnetic halves (9) arranged laterally adjacent to the permanent magnet (10) extend up to the lateral sides of the chamber (3) holding the magnetorheological fluid.

2. The damper (1) according to the preceding claim, **characterised in that** the permanent magnet (10) is arranged adjacent to a chamber (3) holding the magnetorheological fluid (5) and is rotatable about an axis.

3. The damper (1) according to the preceding claim, **characterised in that** the axis about which the permanent magnet (10) is rotatable is oriented substantially perpendicular to a vertical effective axis of the damper (1).

4. The damper (1) according to any one of the preceding claims, **characterised in that** the chamber (3) is placed in a ferromagnetic support which defines a pole shoe (9).

5. The damper (1) according to any one of the preceding claims, **characterised in that** the permanent magnet (10) is arranged in a gap between two ferromagnetic halves (9).

6. The damper (1) according to the preceding claim, **characterised in that** the permanent magnet (10) extends into a respective recess of the ferromagnetic halves (9).

7. The damper (1) according to any one of the preceding claims, **characterised in that** the chamber (3) is placed in a ferromagnetic support in a form-fitting manner.

8. The damper (1) according to any one of the preceding claims, **characterised in that** the damping body (2) comprises a projection (4) for being connected to a mass to be isolated; and/or that the chamber (3) is in the form of a plastic container; and/or that the damper (1) is configured so as to be effective horizontally and vertically.

9. A vibration isolator (15), comprising a spring (16) and a damper (1) according to any one of the preceding claims.

10. A stationary vibration isolation system (13), in particular for vibration-isolated mounting of equipment for processing semiconductor components, comprising a load mounted in vibration-isolated manner on vibration isolators (15) and comprising damper (1)s according to any one of claims 1 - 8.

11. The stationary vibration isolation system (13) according to the preceding claim, **characterised in that** the damper (1)s are integrated in the vibration isolators (15).

12. The stationary vibration isolation system (13) according to any one of claims 10 or 11, **characterised in that** the vibration isolation system (13) is configured as an active vibration isolation system.

## Revendications

1. Un amortisseur (1) pour un système stationnaire d'isolation contre les vibrations (13) , comprenant une chambre (3) contenant un fluide magnéto-rhéologique (5) dans lequel un corps d'amortissement (2) est immergé, un aimant permanent (10) rotatif étant disposé adjacent à la chambre (3) , dont la rotation permet de modifier le flux magnétique à l'intérieur de la chambre (3) et donc la viscosité du fluide magnéto-rhéologique (5);
**caractérisé en ce que** l'aimant permanent (10) est disposé au-dessous de la chambre (3) contenant le fluide magnéto-rhéologique (5), deux moitiés ferromagnétiques (9) arrangées latéralement adjacentes à l'aimant permanent (10) s'étendant jusqu'aux côtés latéraux de la chambre (3) contenant le fluide magnéto-rhéologique.

2. L'amortisseur (1) selon la revendication précédente, **caractérisé en ce que** l'aimant permanent (10) est disposé adjacent à une chambre (3) contenant le fluide magnéto-rhéologique (5) et est rotatif autour d'un axe.

3. L'amortisseur (1) selon la revendication précédente, **caractérisé en ce que** l'axe autour duquel l'aimant permanent (10) est rotatif est orienté sensiblement perpendiculairement à un axe vertical effectif de l'amortisseur (1).

4. L'amortisseur (1) selon l'une quelconque des revendications précédentes, **caractérisé en ce que** la chambre (3) est placée dans un support ferromagnétique qui forme une pièce polaire (9).

5. L'amortisseur (1) selon l'une quelconque des revendications précédentes, **caractérisé en ce que** l'aimant permanent (10) est disposé dans un entrefer entre deux moitiés ferromagnétiques (9).

6. L'amortisseur (1) selon la revendication précédente, **caractérisé en ce que** l'aimant permanent (10) s'étend dans un évidement respectif des moitiés ferromagnétiques (9).

7. L'amortisseur (1) selon l'une quelconque des revendications précédentes, **caractérisée en ce que** la chambre (3) est logée dans un support ferromagnétique par accouplement formel.

8. L'amortisseur (1) selon l'une quelconque des revendications précédentes, **caractérisé en ce que** le corps d'amortissement (2) comprend une projection (4) destinée à être connectée à une masse à isoler;
et/ou **en ce que** la chambre (3) est conçue comme un conteneur en plastique; et/ou **en ce que** l'amortisseur (1) est conçu pour être efficace horizontalement et verticalement.

9. Un isolateur de vibrations (15), comprenant un ressort (16) et un amortisseur (1) selon l'une quelconque des revendications précédentes.

10. Un système stationnaire d'isolation contre les vibrations (13), en particulier pour le montage isolé de vibrations d'un équipement de traitement de composants semiconducteurs, comprenant une charge montée de manière isolée sur des isolateurs de vibrations (15) et comprenant des amortisseurs (1) selon l'une quelconque des revendications 1 à 8.

11. Le système stationnaire d'isolation contre les vibrations (13) selon la revendication précédente, **caractérisé en ce que** les amortisseurs (1) sont intégrés dans les isolateurs de vibrations (15).

12. Le système stationnaire d'isolation contre les vibrations (13) selon l'une quelconque des revendications 10 ou 11, **caractérisé en ce que** le système d'isolation contre les vibrations (13) est configuré comme un système actif d'isolation contre les vibrations.
